# EUROPÄISCHE PATENTSCHRIFT

(11) **EP 1 431 246 B1**
(45) Veröffentlichungstag und Bekanntmachung des Hinweises auf die Patenterteilung: **13.02.2008**
(21) Anmeldenummer: 03104692.3
(22) Anmeldetag: 15.12.2003
(51) Int. Cl.: C01B 33/44, C04B 14/20, C04B 30/00, C09K 21/02

(54) **Verfahren zur Herstellung von Schichtsilikat-Intercalationsverbindungen und deren Verwendung**
Process for the preparation of layered silicate intercalation compounds and their use
Procédé pour la préparation des composés intercalaires silicate en couches et l'utilisation de ces composés

(30) Priorität: 17.12.2002 DE 10259084
(43) Veröffentlichungstag der Anmeldung: 23.06.2004
(73) Patentinhaber: HILTI Aktiengesellschaft, 9494 Schaan (LI)
(72) Erfinder: Wenzel, Antje, 86928 Hofstetten (DE); Reinheimer, Arne, 87668 Zellerberg (DE)
(74) Vertreter: Wildi, Roland

(56) Entgegenhaltungen:
- EP-A- 0 429 246
- US-A- 4 956 121
- DATABASE WPI Section Ch, Week 199745 Derwent Publications Ltd., London, GB; Class A21, AN 1997-486192 XP002273945 & JP 09 227119 A (NIPPON PAINT CO LTD), 2. September 1997 (1997-09-02)

## Beschreibung

Die vorliegende Erfindung betrifft ein Verfahren zur Herstellung von Schichtsilikat-Intercalationsverbindungen mit erhöhtem Expansionsvolumen und/oder modifizierter Onset-Temperatur durch Einlagerung von Intercalatverbindungen in native, blähfähige Schichtsilikate, insbesondere nativen Vermiculit, die dabei erhaltenen Schichtsilikat-Intercalationsverbindungen und deren Verwendung als Intumeszenzmaterial, welches als intumeszierendes Brandschutzadditiv und/oder in geblähter Form als Additiv für die Herstellung von Flammschutz-Materialien, sowie für die Herstellung von hochtemperaturbeständigen Isolations- und Dämmplatten und Dichtungen, insbesondere für Brandschutz-Abdichtungen von Durchbrüchen, Durchführungen und sonstigen Öffnungen in Wänden, Böden und/oder Decken von Gebäuden eingesetzt werden kann.

Blähfähiger Vermiculit und andere expandierbare Schichtsilikat-Verbindungen zeichnen sich aufgrund ihrer hohen Hitzebeständigkeit, der guten Isolations- und Dichtungseigenschaften aus und finden vorrangig als Verpakkungs- und Adsorptionsmaterialien Verwendung. Darüber hinaus besitzen sie als intumeszierende Additive in Brandschutzprodukten aufgrund ihrer Unbrennbarkeit einen entscheidenden Vorteil gegenüber den üblichen Blähgraphitmaterialien.

Blähfähige Schichtsilikate, wie beispielsweise Vermiculit, sind aus Octaeder-und Tetraeder-Schichten aufgebaut, zwischen denen austauschbare Kationen, wie Magnesium- und Aluminium-Kationen eingelagert sind, deren Verhältnis je nach Herkunft des Schichtsilikats variiert. Aufgrund des Vorhandenseins von Zwischenschichtwasser unterliegen solche blähfähigen Schichtsilikate beim Erhitzen einer Expansion, welche dadurch hervorgerufen wird, daß das Zwischenschichtwasser bei höherer Temperatur spontan freigesetzt wird und zur Folge hat, daß die Schichten auseinander gedrängt werden. Die Temperatur, bei der der Expansionsvorgang einsetzt, wird als Onset-Temperatur bezeichnet, die beispielsweise bei nativem blähfähigem Vermiculit, wie er in dem nachfolgenden Vergleichsbeispiel eingesetzt wird, bei 320°C liegt.

Solche blähfähigen Schichtsilikate werden ebenso wie Blähgraphit aufgrund dieses thermischen Expansionsverhaltens als intumeszierendes Brandschutzadditiv für die Herstellung von Flammschutzzusammensetzungen für beispielsweise Brandschutz-Abdichtungen von Durchbrüchen, Durchführungen und sonstigen Öffnungen in Wänden, Böden und/oder Ecken von Gebäuden eingesetzt. Im Brandfall dehnt sich das in der Flammschutz-Zusammensetzung vorliegende blähfähige Schichtsilikat aus, was zur Folge hat, daß auch nach dem Abbrennen des Matrixmaterials der Flammschutz-Zusammensetzung die abzudichtende Öffnung während einer weiteren Zeitdauer durch die Ausdehnung des Schichtsilikats verschlossen bleibt.

Für solche Brandschutz-Abschottungssysteme werden je nach Art und materieller Beschaffung der Rohrdurchführungen unterschiedliche Anforderungen gestellt. So ist beispielsweise bei den sehr schnell schmelzenden und verbrennenden Polyethylenrohren ein Verschließen der entstehenden Öffnung innerhalb kürzester Zeit erforderlich, was eine hohe Expansionsgeschwindigkeit und ein großes Expansionsvolumen des intumeszierenden Materials voraussetzt. Demzufolge ist ebenso wie bei der Onset-Temperatur auch hinsichtlich dieser Parameter ein hohes Maß an Variabilität notwendig, um beispielsweise bei der Herstellung solcher Brandschutzmaterialien das Ausdehnungsverhalten des intumeszierenden Flammschutz-Materials gezielt auf die speziellen Produktanforderungen einstellen zu können. Im Gegensatz zu Blähgraphit, der bislang als Standard-Intumeszenzmaterial eingesetzt wird, aber bei hohen Temperaturen oxidativen Abbrand zeigt, zeichnen sich die blähfähigen Schichtsilikate, wie Vermiculit, durch ihre hohe thermische Beständigkeit aus. In nativer Form besitzen diese blähfähigen Schichtsilikate aber nur ein mäßiges druckaufbauendes Expansionsverhalten, welches den Einsatz dieser Materialien im passiven Brandschutz stark einschränkt.

Die im Handel erhältlichen Schichtsilikate sind jedoch bedingt doch die eingeschränkte Auswahl an eingelagerten Intercalat-Verbindungen (Gast-Verbindungen) in der Variation ihrer Expansionseigenschaften, namentlich ihres Expansionsvolumens und der Onset-Temperatur limitiert. Um jedoch flexibel auf die speziellen Produktanforderungen, insbesondere im Bereich des passiven Brandschutzes reagieren zu können, sind expansionsfähige Schichtsilikat-Intercalationsverbindungen notwendig, die eine höhere Variationsbreite und gezielte Einstellung ihrer Intumeszenzeigenschaften, insbesondere im Hinblick auf das Expansionsvolumen und dem Onset, das heißt die Temperatur beim Expansionsbeginn, zu ermöglichen.

Die Modifizierung von blähfähigen Schichtsilikaten durch Intercalation von Gastmolekülen ist bereits bekannt und erfolgt überlicherweise durch Dispergieren der Silikatteilchen in einer Lösung der entsprechenden Gastverbindung. Als Gastmoleküle können sowohl anorganische Salze als auch organische Verbindungen eingelagert werden. Die Onset-Temperatur der kommerziell zur Verfügung stehenden Schichtsilikate liegt bei etwa 300°C.

So beschreibt das US-Patent 4,305,992 ein intumeszierendes Bahnmaterial mit stark verringertem negativem Expansionsverhalten, welches einen blähfähigen Vermiculit mit einer Teilchengröße von etwa 0,1 mm bis 6 mm enthält, dessen Onset-Temperatur durch Kationenaustausch mit Ammoniumphosphat, Ammoniumcarbonat, Ammoniumacetat, Ammoniumhydroxid und Harnstoff auf eine signifikant niedrigere Temperatur als die der herkömmlichen Vermiculite eingestellt worden ist.

Die US-Patentschrift 5,079,280 und die ihr entsprechende Europäische Patentanmeldung 0 429 246 offenbaren bei niedriger Temperatur expandierbaren Vermiculit und diesen enthaltende intumeszierende Bahnmaterialien. Die Expansionstemperatur wird in diesem Fall durch Intercalation einer Kaliumnitratlösung abgesenkt, wobei als Intercalationsverbindungen auch Ammoniumnitrat, Kaliumchlorid und Ammoniumchlorid angegeben aber als weniger wirksam herausgestellt werden.

Die US-Patentschrift 5,116,537 beschreibt ein Verfahren zur Erniedrigung der Onset-Temperatur und zur Verbesserung der Expansionseigenschaften von Vermiculit ebenfalls mit einer Kaliumnitratlösung.

Die US-Patentschrift 5,326,500 offenbart einen Vermiculit mit verbessertem Expansionsverhalten, durch Intercalation von Lithiumkationen, (C₂-C₆-Alkyl)-ammoniumkationen, Allyl-ammoniumkationen oder Ammonium-(C₃-C₆-alkyl-carbonsäuren modifiziert worden sind.

Der Abstract der Japanischen Patentanmeldung JP 09227119 A beschreibt ein blähfähiges Schichtsilikat, in welches quaternäre Ammoniumionen und ein Melaminharz eingelagert worden sind, was zu einer verbesserten Dispergierbarkeit des Schichtsilikats führen soll, welches als Verdicker für Beschichtungsmaterialien eingesetzt werden soll.

Gegenstand der US-Patentschrlft 4,956,121 sind Schichtsilikate aus der Glimmer und Vermiculit umfassenden Gruppe, in welche Dimethylacetamid-Lithiumchelat-Komplexe eingelagert sind, welche Schichtsilikate insbesondere in Form von Suspension zur Feuerfestausrüstung von Papier, Folien, Platten oder auch zur Erzeugung von Schutzüberzügen auf weniger flammfesten Gegenständen verwendet werden können. Für die Herstellung dieser Schichtsilikat-Intercalationsverbindung ist der Einsatz von Lithium-Glimmer beziehungsweise Lithium-Vermiculit notwendig.

Allerdings vermögen die nach diesem Stand der Technik erhaltenen blähfähigen Schichtsilikate nicht vollständig zu befriedigen, weil sich keine gezielte Abstimmung der Eigenschaften des intumeszierenden Brandschutzadditivs auf die jeweilige Bindemittelmatrix des Brandschutzmaterials erreichen läßt. Wie oben bereits ausgeführt worden ist, müssen beim passiven Brandschutz schmelzende Metall- und Kunststoffrohre durch den Blähvorgang der Intumeszenzmaterialien abgequetscht werden, um dadurch den durch den Schrumpfungsprozeß der Rohrdurchführungen entstehenden Hohlraum schnell wieder zu verschließen unter Ausbildung einer mechanisch stabilen und thermisch isolierenden Schutzschicht. Hierfür sind Intumeszenzmaterialien mit druckaufbauender Expansion erforderlich, bei denen der Expansionsprozeß trotz Widerstand beziehungsweise Gegendruck nicht abbricht, wie dies beispielsweise bei der chemischen Intumeszenz, die durch Reaktion von Kohlenstoff-Spendern (beispielsweise Stärke und Pentaerythrit), Säurespendern (beispielsweise Ammoniumpolyphosphat) und Treibmitteln (beispielsweise Melamin) der Fall ist.

Des weiteren darf der Expansionsprozeß erst dann einsetzen, wenn die Bindemittelmatrix der Brandschutz-Zusammensetzung erweicht ist, da sich erst dann eine synergistische Wirkung und die bestmögliche Effizienz der druckaufbauenden Expansion des blähfähigen Schichtsilikats erreichen läßt. Es ist daher erforderlich, über blähfähige Schichtsilikate zu verfügen, deren Eigenschaftsprofil bezüglich des Expansionsverhaltens gezielt und genauer eingestellt werden kann, wobei es insbesondere darauf ankommt, bei erhöhter Expansionsgeschwindigkeit die Onset-Temperaturen in der gewünschten Weise modifizieren zu können.

Die Aufgabe der vorliegenden Erfindung besteht somit darin, ein Verfahren anzugeben, mit dem es gelingt, native, blähfähige Schichtsilikate durch Einlagerung von Intercalatverbindungen derart zu modifizieren, daß sie ein erhöhtes Expansionsvolumen aufweisen und gleichzeitig eine Modifizierung der Onset-Temperatur ermöglichen.

Es hat sich überraschenderweise gezeigt, daß es möglich ist, durch einen Ionenaustausch des nativen und blähfähigen Schichtsilikats mit mindestens einem kationischen Tensid und durch Intercalation bestimmter organischen Intercalatverbindungen oder durch Intercalation bestimmter organischer Intercalatverbindungen in das nicht-ionenausgetauschte Schichtsilikat sowohl ein erhöhtes Expansionsvolumen des Materials zu erreichen als auch eine Modifizierung der Onset-Temperatur zu ermöglichen.

Gegenstand der Erfindung ist daher das Verfahren gemäß Anspruch 1. Die Unteransprüche betreffen bevorzugte Ausführungsformen dieses Erfindungsgegenstandes, die in dieser Weise erhaltenen Schichtsilikat-Intercalationsverbindungen und deren Verwendung als intumeszierende Brandschutzadditive für die Herstellung von Flammschutz-Zusammensetzungen.

Die Erfindung betrifft somit ein Verfahren zur Herstellung von Schichtsilikat-Intercalationsverbindungen mit erhöhtem Expansionsvolumen und/oder modifizierter Onset-Temperatur durch Einlagerung von Intercalatverbindungen in native, blähfähige Schichtsilikate, insbesondere nativem Vermiculit, welches dadurch gekennzeichnet ist, daß man das native Schichtsilikat einem Ionenaustausch mit mindesten einem kationischen Tensid unterwirft und gleichzeitig oder in einer weiteren Stufe mindestens eine organische Intercalatverbindung, ausgewählt aus der Methanol, Ethanol, 2-Propanol, 2-Butanol, tert.-Butanol, Benzylalkohol, 1-Decanol, Ethylenglykol, 1,3-Propandiol, 1,4-Butandiol, Glycerin, Ameisensäure, Essigsäure, Hexansäure, Adipinsäure, Malonsäure, Citronensäure, Gluconsäure, Glykolsäure, Milchsäure, Glyoxylsäure, Trifluoressigsäure, Nitrilotriessigsäure, die Alkalimetallsalze und Amide von Essigsäure, Malonsäure, Citronensäure, Gluconsäure, Ethylendiamintetraessigsäure und Nitrilotriessigsäure, Harnstoff, Dimethylmalonat, Diethylmalonat, Salicylsäuremethylester, Malonsäurediamid, Dimethylformamid, Dimethylsulfoxid, Nitromethan, Aceton, Tetrahydrofuran, Chloroform, Diethylether, Diphenylether, Toluol, Ethylendiamintetraessigsäure (EDTA) und/oder deren Metallkomplexe, insbesondere den Mg-EDTA-Komplex und/oder den Cu-EDTA-Komplex umfassenden Gruppe, in das Schichtsilikat einlagert, mit der Maßgabe, daß die Intercalation von Dimethylformamid, Chloroform, Dimethylacetamid, Toluol und Dimethylsulfoxid auch ohne vorherigen Ionenaustausch erfolgen kann.

Die hierin angesprochene Onset-Temperatur [°C] ist als die Temperatur definiert, bei der der thermische Expansionsprozeß des intumeszierenden Systems, also hier der erfindungsgemäßen Schichtsilikat-Intercalationsverbindungen beginnt, das heißt die Temperatur zu Beginn des Expansionsvorgangs. Die herkömmlichen und im Handel erhältlichen blähfähigen nativen Schichtsilikate, beispielsweise der in dem Beispiel 1 angesprochene native Vermiculit aus China, besitzt eine Onset-Temperatur von 320°C, wenn diese mit Hilfe der nachfolgend beschriebenen Vorrichtung und den angegebenen Meßbedingungen bestimmt wird.

Das Expansionsvolumen [%/mg] ist auf die Menge der Schichtsilikat-Intercalationsverbindung normiert und entspricht der Differenz zwischen dem Anfangsvolumen und dem Endvolumen der vollständig expandierten Schichtsilikat-Intercalationsverbindung. Nähere Angaben zur Bestimmung dieser Parameter finden sich im weiteren Verlauf der Beschreibung.

Diese erfindungsgemäße Verfahrensweise ermöglicht im Vergleich zu nativem blähfähigem Vermiculit eine Erhöhung des Expansionsvolumens von 4% bis 66% bei gleichzeitiger Möglichkeit der Variation der Onset-Temperatur gegenüber der Onset-Temperatur von 320°C von nativem blähfähigem Vermiculit im Bereich von 179°C bis 376°C und damit eine wesentlich besseren Möglichkeit der Anpassung des Expansionsverhaltens des nativen Vermiculits an die zu erwartenden Einsatzbedingungen des angestrebten Anwendungszwecks.

Gemäß einer bevorzugten Ausführungsform der Erfindung verwendet man bei dem Ionenaustausch des nativen, blähfähigen Schichtsilikats als kationisches Tensid eine oberflächenaktive, quartäre Alkylammoniumverbindung. Besonders bevorzugt setzt man eine oberflächenaktive, quartäre Alkylammoniumverbindung der allgemeinen Formel 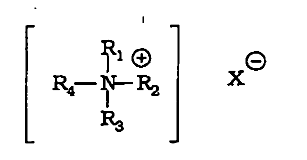 ein, in der R₁, R₂, R₃ und R₄ unabhängig voneinander Wasserstoffatome, geradkettige oder verzweigte, gesättigte oder ungesättigte Alkylgruppen, Cycloalkylgruppen, Cycloalkylalkylgruppen, Alkenylgruppen, Arylgruppen, Arylalkylgruppen oder Alkylarylgruppen mit 1 bis 30, vorzugsweise 1 bis 18 C-Atomen und X⁻ ein Anion mit der Maßgabe bedeuten, daß mindestens eine der Gruppen R₁, R₂, R₃ und R₄ 12 bis 30, vorzugsweise 12 bis 18 C-Atomen aufweist.. Bei den Anionen X- handelt es sich vorzugsweise um Halogenidanionen, namentlich Chloridanionen und/oder Bromidanionen aber auch Sulfat-und Sulfonat-Anionen.

Besonders bevorzugte oberflächenaktive, quartäre Alkylammoniumverbindungen sind die gegebenenfalls substituierten C₁₀-C₁₈-Albyl-tri-C₁-C₆-alkyl-ammoniumsalze, C₁₀-C₁₈-Dialkyl-di-C₁-C₆-alkyl-ammoniumsalze. C₁₀-C₁₈-Trialkyl-C₁-C₆-alkyl-mnmoniumsalze und/oder C₁₀-C₁₈-Tetraalkyl-ammoniumsalze. Besonders bevorzugte Verbindungen dieser Art sind Decyl-trimethylammoniumhalogenid, Dodecyl-trimethylammoniumhalogenid, Tetradecyl-trimethylammoniumhalogenid, Octadecyl-trimethylammoniumhalogenid und/oder Tridecylammoniumhalogenid, wobei vorzugsweise die Chloride oder Bromide dieser Verbindungen eingesetzt werden.

Bei dem erfindungsgemäßen Verfahren wird gemäß der ersten Ausführungsform das in dieser Weise durch den Ionenaustausch mit dem kationischen Tensid erhaltene Schichtsilikat gleichzeitig oder in einer weiteren Stufe mit der organischen Intercalatverbindung behandelt, vorzugsweise verwendet man Ethanol, Essigsäure, Citronensäure, Malonsäure, Gluconsäure, Ethylendiamintetraessigsäure, Nitrilotriessigsäure oder die Alkalimetallsalze und Amide dieser Carbonsäuren, die Metallkomplexe der Ethylendiauiintetraessigsäure, insbesondere den Mg-EDTA-Komplex oder den Cu-EDTA-Komplex, Harnstoff und/oder Dimethylformamid.

Das erfindungsgemäße Verfahren kann vorzugsweise in der Weise durchgeführt werden, daß man in einem ersten Schritt den Ionenaustausch durch Behandeln des nativen, blähfähigen Schichtsilikats mit mindestens einem kationischen Tensid bewirkt und in einem zweiten Schritt eine Behandlung mit der mindestens einen organischen Intercalatverbindung durchführt.

Vorzugsweise suspendiert man hierzu das native Schichtsilikat in einer Lösung des kationischen Tensids in einem geeigneten Lösungsmittel, bewirkt die Intercalation, gegebenenfalls unter Erhitzen, trennt das ionenausgetauschte Schichtsilikat aus der Suspension ab, wäscht und trocknet es gegebenenfalls und intercaliert dann die organische Intercalatverbindung gegebenenfalls aus einer Lösung in einem geeigneten Lösungsmittel in das ionenausgetauschte Schichtsilikat, wonach man die Schichtsilikat-Intercalationsverbindung aus der Suspension abtrennt, wäscht und gegebenenfalls trocknet.

Gemäß einer weiteren Ausführungsform der Erfindung bewirkt man den Ionenaustausch mit dem kationischen Tensid und die Einlagerung der organischen Intercalatverbindung in das native Schichtsilikat in einem Schritt. Hierzu setzt man das kationische Tensid und die organische Intercalatverbindung vorzugsweise in Form einer Mischung mit dem in der Schichtsilikat-Intercalationsverbindung angestrebten Mischungsverhältnis ein.

In diesem Fall ist es bevorzugt, daß man das native Schichtsilikat in einer Lösung des kationischen Tensids und der organischen Intercalatverbindung in einem geeigneten Lösungsmittel suspendiert, den gleichzeitigen Ionenaustausch und die Intercalation gegebenenfalls unter Erhitzen bewirkt und die erhaltene Schichtsilikat-Intercalationsverbindung aus der Suspension abtrennt, wäscht und gegebenenfalls trocknet.

Bei beiden Verfahrensweisen ist es bevorzugt, die organischen Intercalatverbindungen durch Austausch des Zwischenschichtwassers des Schichtsilikats einzulagern.

Erfindungsgemäß verwendet man vorzugsweise als natives, blähfähiges Schichtsilikat Vermiculit, Hydrobiotit und/oder Chlorit-Vermiculit mit einem mittleren Teilchendurchmesser von 0,1 mm bis 10 mm, vorzugsweise 0,3 mm bis 1,0 mm.

Bei dem erfindungsgemäßen Verfahren setzt man als Lösungsmittel vorzugsweise Wasser, einen aliphatischen oder aromatischen Alkohol, einen Ether, einen Ester, ein Alkan, ein Cycloalkan, ein aromatisches Lösungsmittel und/oder ein Amin ein.

Weiterhin ist es bevorzugt, bei einer Konzentration des kationischen Tensids beziehungsweise der organischen Intercalatverbindung in der Lösung von 0,01 Mol/l bis 5,0 Mol/l, vorzugsweise 0,1 Mol/l bis 1,0 Mol/l zu arbeiten.

Die Ionenaustauschreaktion beziehungsweise die Intercalationsreaktion werden mit Vorteil bei einer Temperatur im Bereich von 10°C bis 150°C, vorzugsweise 25°C bis 60°C und insbesondere bei Raumtemperatur bei einer Reaktionszeit von 0,5 bis 144 Stunden, vorzugsweise 10 bis 36 Stunden durchgeführt.

Die nach dem erfindungsgemäßen Verfahren erhaltene Schichtsilikat-Intercalationsverbindung wird vorzugsweise durch Filtration oder Dekantieren aus der Suspension abgetrennt, mit einigen Millilitern des verwendeten Lösungsmittels gewaschen und dann gegebenenfalls getrocknet. Die Trocknung kann dabei bei Raumtemperatur, im Vakuum oder im Trockenschrank bei Raumtemperatur oder bei erhöhter Temperatur erfolgen. Vorzugsweise arbeitet man im Trockenschrank während 1 Stunde bis 12 Stunden bei 60°C bis 80°C.

Ein weiterer Gegenstand der Erfindung ist die Verwendung der nach der oben beschriebenen Verfahrensweise erhältlichen Schichtsilikat-Intercalationsverbindungen als Intumeszenzmaterial, welches als solches als intumeszierendes Brandschutzadditiv und/oderin geblähter Form als Additiv für die Herstellung von Flammschutz-Materialien, sowie für die Herstellung von hochtemperaturbeständigen Isolations- und Dämmplatten und Dichtungen eingesetzt werden kann, insbesondere für Brandschutz-Abdichtungen von Durchbrüchen, Durchführungen und sonstigen Öffnungen in Wänden, Böden und/oder Decken von Gebäuden. Hierzu bringt man diese Schichtsilikat-Intercalationsverbindungen in üblicher Weise in die für solche Anwendungszwecke eingesetzten Matrixmaterialien ein und zwar in den für den angestrebten Expansionseffekt notwendigen Mengen.

Die oben angesprochene und in den nachfolgenden Beispielen angegebenen Parameter Expansionsvolumen und Onset-Temperatur der erfindungsgemäß erhältlichen Schichtsilikat-Intercalationsverbindungen werden durch thermomechanische Analyse (TMA) gemessen. Bei der thermomechanischen Analyse (TMA) werden Dimensionsänderungen der Schichtsilikat-Intercalationsverbindungen als Funktion der Temperatur und der Zeit gemessen. Hierzu wird die Probe auf einen Probenträger aufgebracht und die Dimensionsänderung der Probe mit Hilfe einer Messsonde in Abhängigkeit von der Aufheiztemperatur gemessen und aufgezeichnet. Hierzu wird die plättchenförmige Probe aus der Schichtsilikat-Intercalationsverbindung in einen Korundtiegel eingebracht, der mit einem Stahltiegel abgedeckt wird. Dieser Stahltiegel gewährleistet bei der Ausdehnung der Probe die ruckfreie Übertragung der Dimensionsänderung der Probe auf die Messsonde, welche mit der Oberseite des Stahltiegels in mechanischem Kontakt steht und mit einer einstellbaren Auflast beaufschlagt werden kann.

Bei der Durchführung der Bestimmung des Expansionsverhaltens unter Anwendung dieser Meßeinrichtung wurden die folgenden Bedingungen eingehalten:
- Vorrichtung:: TMA/SDTA840; Firma Mettler-Toledo, Gießen. DE
- Temperaturprogramm:: Dynamischer Modus (mit vorgeschalteter isothermer Phase während 5 Minuten bei 25°C)
- Aufheizrate:: 20°C /min
- Temperaturbereich:: 25°C bis 1100°C
- Analysengas:: Synthetische Luft
- Flußrate:: 60 ml /min
- Auflast:: 0.06 N
- Probengefäß:: 150 µl Korundtiegel + 150µl Stahltiegel (als Deckel

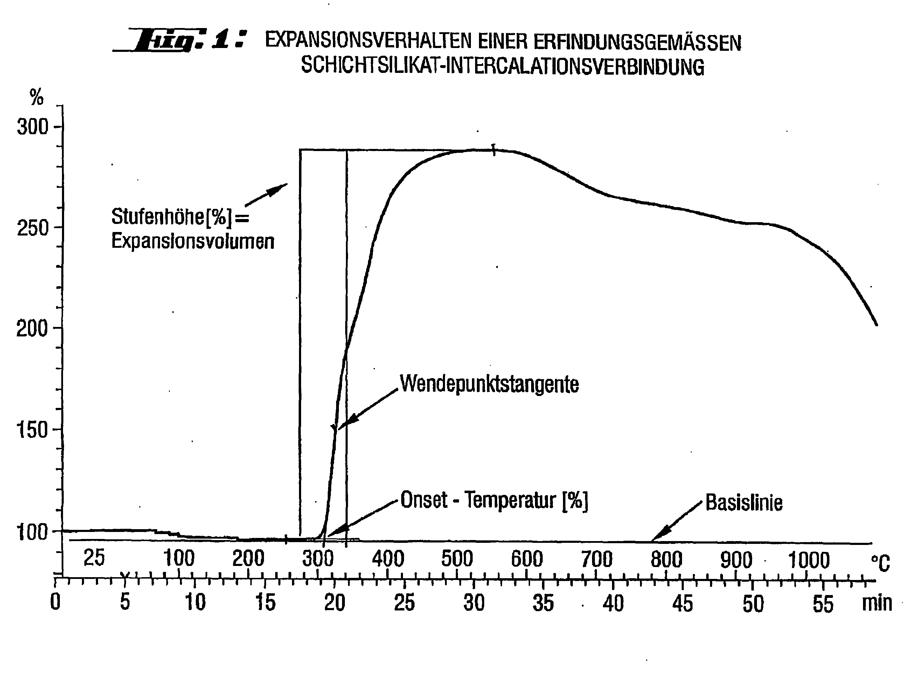

Als Ergebnis der in dieser Weise durchgeführten thermomechanischen Analyse erhält man die in der
- **Figur 1**: der beigefügten Zeichnung dargestellte TMA-Kurve einer Schichtsilikat-Intercalationsverbindung.

Wie in dieser Figur 1 dargestellt ist, stellt die Onset-Temperatur [°C] mathematisch den Schnittpunkt .der Basislinie vor der Längenänderung der Probe mit der Wendetangente der Expansionskurve dar.

Das Expansionsvolumen entspricht der horizontalen Stufe zwischen der Basislinie und dem Maximum der Kurve. Es gibt die Ausdehnung der Substanz [%] wieder. Da bei diesen Messungen das Volumen von der eingewogenen Substanzmenge abhängig ist, wird das Expansionsvolumen auf die Einwaage normiert. Als Einheit ergibt sich das Expansionsvolumen (Ausdehnung) in [%/mg⁻].

Sämtliche Messungen der Parameter, die in den nachfolgenden Beispielen angegeben sind, erfolgten mit Schichtsilikat-Proben vergleichbarer Teilchengröße im Bereich von 0,3 bis 1,0 mm. Dies wurde durch Sieben der jeweiligen Schichtsilikat-Typen gewährleistet.

Bei der Verwendung der erfindungsgemäß erhältlichen Schichtsilikat-Intercalationsverbindungen als intumeszierendes Brandschutzadditiv ist je nach Anwendung eine niedrigere oder höhere Onset-Temperatur erforderlich bei vorzugsweise einem durchwegs erhöhtem Expansionsvolumen, welche Eigenschaften auf das Schmelzverhalten der Kabel- und Rohrdurchführungen abgestimmt werden müssen. Erfindungsgemäß wird es ohne weiteres möglich, den Beginn der Expansion der Schichtsilikat-Intercalationsverbindung genau auf das Einsatzgebiet abzustimmen, und in dieser Weise eine höhere Variabilität der Intumeszenzmaterialien für den passiven Brandschutz zu erreichen.

Die erfindungsgemäß erhältlichen Schichtsilikat-Intercalationsverbindungen expandieren beim Erhitzen auf die Onset-Temperatur, welche entweder gezielt in einem Ofen durchgeführt werden kann zur Herstellung entsprechend expandierter Produkte oder beim Vorliegen anderer Heizquellen, wie Feuer, Lichtbestrahlung oder elektrischer Impulse, wobei dies auch namentlich dann der Fall ist, wenn die Schlichtsilikat-Interealationsverbindungen in eine Bindemittelmatrix eingebettet werden unter Bildung einer Brandschutz-Dichtmasse. Dabei ist festzuhalten, daß die erfindungsgemäß hergestellten Schichtsilikat-Intercalationsverbindungen auch unter Auflast expandieren und damit sehr starke Expansionskräfte freizusetzen vermögen, was insbesondere für ihren Einsatz als Intumeszenzmaterial von Bedeutung ist.

Die folgenden Beispiele dienen der weiteren Erläuterung der Erfindung.

### BEISPIEL 1 (Vergleich)

Dieses Beispiel verdeutlicht lediglich die analytische Durchführung der Bestimmung der Onset-Temperatur und des Expansionsvolumens anhand von nativem handelsüblichem Vermiculit aus China.

In einen 150 µl Korundtiegel werden 20 mg kommerziellen nativen Vermiculits eingewogen und mit einem 150 µl Stahltiegel als Deckel abgedeckt, um eine gleichmäßige Kraftverteilung der Auflast von 0,06 N zu erreichen. Hierbei sollte das Stahltiegelchen noch weit genug in den Korundtiegel eintauchen, um eine hinreichend gute Stabilität der gesamten Einrichtung zu garantieren. Anschließend wird die Probenanordnung so auf den Probentisch der TMA-Vorrichtung aufgebracht, daß die Meßsonde (Quarzglasbügel) mittig im Kontakt mit dem Boden des Stahltiegels steht. Auf diese Weise ist garantiert, daß jede Längenänderung der Probe störungsfrei von der Meßsonde aufgenommen wird. Die Probe wird bei einer konstanten Auflast von 0,06 N beschwert und mit einer Aufheizgeschwindigkeit von 20°C/min auf 1100°C erhitzt. Gemessen wird die Längenänderung als Funktion der Temperatur.

Es zeigt sich anhand der ermittelten Kurve, daß die thermische Expansion des nativen Vermicults bei 320°C beginnt, was der Onset-Temperatur entspricht, und daß sich ein Expansionsvolumen von 14,8 [%/mg] ergibt.

### BEISPIEL 2

Intercalation von Ethylenglykol in Vermiculit nach dem Ionenaustausch mit Decyl-trimethylammoniumbromid.

In einem 100 ml Becherglas rührt man 3 g (0,05 Mol) nativen Vermiculit in 10 ml einer 0,1 molaren wässrigen Lösung von Decyl-trimethylammoniumbromid ein und läßt das kationische Tensid während 48 Stunden einwirken.

Die Aufarbeitung erfolgt durch Abdekantieren der überstehenden Lösung und Waschen mit einigen Millilitern Wasser. Anschließend versetzt man in einem 50 ml Becherglas den in dieser Weise ionenausgetauschten Vermiculit mit 10 ml Ethylenglykol. Nach einer Reaktionszeit von 48 Stunden wird die überstehende Lösung abdekantiert und der Rückstand bei 60°C während 6 Stunden getrocknet.

Die TMA-Analyse ergab eine Onset-Temperatur von 296°C und ein normiertes Expansionsvolumen von 18,5 [%/mg].

### BEISPIEL 3

Intercalation von Ethylendiamintetraessigsäure (EDTA) in mit Decyl-trimethyl-ammoniumbromid ionenausgetauschtem Vermicult.

Man bringt 3 g (0,05 Mol) Vemiculit in 20 ml einer wässrigen Lösung ein, die 0,01 Mol Decyl-trimethylammoniumbromid und 0,05 Mol EDTA enthält und läßt dieses Reaktionsgemisch während 72 Stunden einwirken. Die Aufarbeitung erfolgt durch Abdekantieren der überstehenden Lösung, portionsweises Waschen mit 100 ml Wasser und nachfolgendem 6-stündigem Trocknen bei 60°C.

Die TMA-Analyse ergab eine Onset-Temperatur von 248°C und ein normiertes Expansionsvolumen von 20,8 [%/mg].

### BEISPIEL 4

Intercalation von Ethylendiamintetraessigsäure in ionenausgetauschtem Vermiculit.

Man behandelt in einem 100 ml Becherglas 3 g (0,05 Mol) nativen Vermiculit mit 10 ml einer 0,1 molaren Lösung von Decyl-trimethylammoniumbromid. Man trennt das Material ab, wäscht mit Wasser und versetzt das erhaltene Produkt anschließend mit 10 ml einer 0,1 molaren wässrigen Lösung von Ethylendiamintetraessigsäure. Nach einer Reaktionszeit von 48 Stunden dekantiert man die überstehende Lösung ab, wäscht mit einigen Millilitern Wasser und trocknet den Rückstand während 6 Stunden bei 60°C.

Die TMA-Analyse ergab eine Onset-Temperatur von 179°C und ein normiertes Expansionsvolumen von 22,8 [%/mg].

In gleicher Weise wurde die Intercalation von weiteren organischen Verbindungen in mit einem kationischen Tensid ionenausgetauschten Vermiculit durchgeführt. Die hierbei eingesetzten Materialien und die Onset-Temperatur und das Expansionsvolumen der erhaltenen Schichtsilikat-Intercalationsverbindungen sind in der nachfolgenden Tabelle 1 zusammengestellt.

**Tabelle 1**

| Typ Wirt | Intercalat | Onset-Temperatur [°C] | Expansionsvolumen, normiert [%/mg] |
|---|---|---|---|
| Nativer Vermiculit | --- (Vergleich) | 320 | 14,8 |
| C10NBr* | EDTA | 179 | 22,8 |
| C14NBr** | Gluconsäure-Natriumsalz | 191 | 18,4 |
| C10NBr | Gluconsäure-Natriumsalz | 198 | 18,3 |
| C14NBr | EDTA | 218 | 20,3 |
| C10NBr | Essigsäure | 273 | 15,5 |
| C10NBr | DMF | 273 | 24,6 |
| C14NBr | DMF | 280 | 22,9 |
| C12NBr | DMF | 281 | 25,1 |
| C14NBr | Ethanol | 291 | 18,1 |
| C10NBr | Ethylenglykol | 296 | 18,5 |
| C10NBr | Harnstoff | 300 | 16,6 |
| C10NBr | Ethanol | 311 | 16,6 |
| C14NBr | Ethylenglykol | 333 | 19,0 |
| C14NBr | Harnstoff | 348 | 22,3 |
| C14NBr | Essigsäure | 354 | 18,2 |
| C10NBr | Malonsäurediamid | 358 | 16,6 |
| C14NBr | Malonsäurediamid | 376 | 15,5 |
| Nativer Vermiculit | C10NBr/EDTA (1:10) | 245 | 21,6 |
| Nativer Vermiculit | C10NBr/EDTA (1:05) | 248 | 20,8 |
| Nativer Vermiculit | C10NBr/EDTA (1:1) | 265 | 21,2 |
| Nativer Vermiculit | C10NBr/EDTA (1:06) | 268 | 21,4 |
| Nativer Vermiculit | C10NBr/EDTA (1:03) | 281 | 22,6 |

| | | | |
|---|---|---|---|
| * C10NBr = Decyl-trimethylammoniumbromid ** C14NBr = Tetradecyl-trimethylammoniumbromid | | | |

Aus der obigen Tabelle 1 läßt sich erkennen, daß es ohne weiteres möglich ist, in Abhängigkeit von der Art der Reaktionsteilnehmer die Onset-Temperatur und das Expansionsvolumen des nativen Vermiculits in der gewünschten Weise gezielt einzustellen.

### BEISPIEL 5

Das folgende Beispiel verdeutlicht die weitere Alternative des erfindungsgemäßen Verfahrens, gemäß dem Dimethylformamid (DMF), Chloroform, Toluol, Dimethylacetamid und Dimethylsulfoxid (DMSO) als organische Verbindungen ohne vorausgehenden Ionenaustausch in das native, blähfähige Schichtsilikat eingelagert werden.

### Intercalation von Dimethylformamid in Vermiculit

Man benetzt 3 g (0,05 Mol) nativen Vermiculit vollständig mit 10 ml Dimethylformamid und läßt die organische Verbindung während maximal 5 Minuten einwirken. Die Aufarbeitung erfolgt direkt anschließend durch Abfiltrieren oder Abdekantieren und Trocknen. Auf den Reinigungsschritt durch Waschen mit Lösungsmittel kann verzichtet werden.

Die TMA-Analyse ergab eine Onset-Temperatur von 281°C und ein normiertes Expansionsvolumen von 26,5[%/mg].

In gleicher Weise mit Dimethylsulfoxid, Dimethylacetamid und Tuluol behandelter nativer Vermiculit ergibt Vermiculit-Intercalationsverbindungen mit den in der nachfolgenden Tabelle 2 angegebenen Onset-Temperaturen und Expansionsvolumina.

**Tabelle 2**

| Typ Wirt | Intercalat | Onset-Temperatur [°C] | Expansionsvolumen, normiert [%/mg] |
|---|---|---|---|
| Nativer Vermiculit | DMSO | 267 | 16,6 |
| Nativer Vermiculit | DMF | 274 | 26,5 |
| Nativer Vermiculit | Dimethylacetamid | 284 | 20,7 |
| Nativer Vermiculit | Toluol | 296 | 17,4 |
| | | | |

Auch die obige Tabelle 2 läßt erkennen, daß es mit Hilfe der erfindungsgemäßen Verfahrensweise möglich ist, die Onset-Temperatur und das Expansionsvolumen von nativem Vermiculit in der gewünschten Weise einzustellen.

## Patentansprüche

1. Verfahren zur Herstellung von Schichtsilikat-Intercalationsverbindungen mit erhöhtem Expansionsvolumen und/oder modifizierter Onset-Temperatur durch Einlagerung von Intercalatverbindungen in native, blähfähige Schichtsilikate, insbesondere nativen Vermiculit, **dadurch gekennzeichnet, daß** man das native Schichtsilikat einem Ionenaustausch mit mindesten einem kationischen Tensid unterwirft und gleichzeitig oder in einer weiteren Stufe mindestens eine organische Intercalatverbindung, ausgewählt aus der Methanol, Ethanol, 2-Propanol, 2-Butanol, tert.-Butanol, Benzylalkohol, 1-Decanol, Ethylenglykol, 1,3-Propandiol, 1,4-Butandiol, Glycerin, Ameisensäure, Essigsäure, Hexansäure, Adipinsäure, Malonsäure, Citronensäure, Gluconsäure, Glykolsäure, Milchsäure, Glyoxylsäure, Trifluoressigsäure, Nitrilotriessigsäure, die Alkalimetallsalze und Amide von Essigsäure, Malonsäure, Citronensäure, Gluconsäure, Ethylendiamintetraessigsäure und Nitrilotriessigsäure, Harnstoff, Dimethylmalonat, Diethylmalenat, Salicylsäuremethylester, Malonsäurediamid, Dimethylformamid, Dimethylsulfoxid, Nitromethan, Aceton, Tetrahydrofuran, Chloroform, Diethylether, Diphenylether, Toluol, Ethylendiamintetraessigsäure (EDTA) und/oder deren Metallkomplexe, insbesondere den Mg-EDTA-Komplex und/oder den Cu-EDTA-Komplex umfassenden Gruppe, in das Schichtsilikat einlagert, mit der Maßgabe, daß die Intercalation von Dimethylformamid, Chloroform, Dimethylacetamid, Toluol und Dimethylsulfoxid auch ohne vorherigen Ionenaustausch erfolgen kann.

2. Verfahren nach Anspruch 1, **dadurch gekennzeichnet, daß** man als kationisches Tensid eine oberflächenaktive, quartäre Alkylammoniumverbindung einsetzt.

3. Verfahren nach Anspruch 2, **dadurch gekennzeichnet, daß** man als kationisches Tensid eine oberflächenaktive, quartäre Alkylammoniumverbindung der allgemeinen Formel 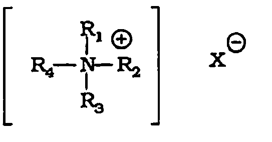 in der R₁, R₂, R₃ und R₄ unabhängig voneinander Wasserstoffatome, geradkettige oder verzweigte, gesättigte oder ungesättigte Alkylgruppen, Cycloalkylgruppen. Cycloalkylalkylgruppen, Alkenylgruppen, Arylgruppen, Arylalkylgruppen oder Alkylarylgruppen mit 1 bis 30, vorzugsweise 1 bis 18 C-Atomen und X⁻ ein Anion mit der Maßgabe bedeuten, daß mindestens eine der Gruppen R₁, R₂, R₃ und R₄ 12 bis 30, vorzugsweise 12 bis 18 C-Atomen aufweist, einsetzt.

4. Verfahren nach Anspruch 3, **dadurch gekennzeichnet, daß** man als oberflächenaktive, quartäre Alkylammoniumverbindung ein gegebenenfalls substituiertes C₁₀-C₁₈-Alkyl-tri-C₁-C₆-alkyl-ammoniumsalz, C₁₀-C₁₈-Dialkyl-di-C₁-C₆-alkyl-ammoniumsalz, C₁₀-C₁₈-Triolyl-C₁-C₆-alkyl-ammomumsalz und/oder C₁₀-C₁₈-Tetraalkyl-ammoniumsalz verwendet.

5. Verfahren nach Anspruch 4, **dadurch gekennzeichnet, daß** man als oberflächenaktive quartäre Ammoniumverbindung ein Decyl-trimethylammoniumhalogenid, Dodecyl-trimethylammoniumhalogenid, Tetradecyl-trimethylammoniumhalogenid. Octadecyl-trimethylammoniumhalogenid und/oder Tridecylammoniumhalogenid, vorzugsweise die Chloride oder Bromide dieser Verbindungen einsetzt.

6. Verfahren nach den Ansprüchen 1 bis 5, **dadurch gekennzeichnet, daß** man als Intercalatverbindung Ethanol, Essigsäure, Citronensäure, Malonsäure, Gluconsäure, Ethylendiamintetraessigsäure, Nitrilotriessigsäure oder die Alkalimetallsalze und Amide dieser Carbonsäuren, Harnstoff und/oder Dimethylformamid einlagert.

7. Verfahren nach mindestens einem der vorhergehenden Ansprüche, **dadurch gekennzeichnet, daß** man in einem ersten Schritt den Ionenaustausch durch Behandeln des native Schichtsilikats mit dem mindestens einen kationischen Tensid bewirkt und in einem zweiten Schritt eine Behandlung mit der mindestens einer organischen Intercalatverbindung durchführt.

8. Verfahren nach Anspruch 7, **dadurch gekennzeichnet, daß** man das native Schichtsilikat in einer Lösung des kationischen Tensids in einem geeigneten Lösungsmittel suspendiert, die Intercalation gegebenenfalls unter Erhitzen bewirkt, das ionenausgetauschte Schichtsilikat aus der Suspension abtrennt, gegebenenfalls wäscht und trocknet, dann die organische IntercalatVerbindung gegebenenfalls aus einer Lösung in einem geeigneten Lösungsmittel in das ionenausgetauschte Schichtsilikat intercaliert und die erhaltene Schichtsflikat-Intercalationsverbindung aus der Suspension abtrennt, wäscht und gegebenenfalls trocknet.

9. Verfahren nach mindestens einem der vorhergehenden Ansprüche, **dadurch gekennzeichnet, daß** man den Ionenaustausch mit dem kationischen Tensid und die Einlagerung der organischen Intercalatverbindung in das native Schichtsilikat in einem Schritt durchführt.

10. Verfahren nach Anspruch 9, **dadurch gekennzeichnet, daß** man das kationische Tensid und die organische Intercalatverbindung in Form einer Mischung mit dem in der Schichtsilikat-Intercalationsverbindung angestrebten Mischungsverhältnis einsetzt.

11. Verfahren nach Anspruch 10, **dadurch gekennzeichnet, daß** man das native Schichtsilikat in einer Lösung des kationischen Tensids und der organischen Intercalatverbindung in einem geeigneten Lösungsmittel suspendiert, den gleichzeitigen Ionenaustausch und Intercalation gegebenenfalls unter Erhitzen bewirkt und die erhaltene Schichtsilikat-Intercalationsverbindung aus der Suspension abtrennt, wäscht und gegebenenfalls trocknet.

12. Verfahren nach mindestens einem der Ansprüche 7 bis 11, **dadurch gekennzeichnet, daß** man die organischen Intercalatverbindungen durch Austausch des Zwischenschichtwassers des Schichtsilikats einlagert.

13. Verfahren nach mindestens einem der vorhergehenden Ansprüche, **dadurch gekennzeichnet, daß** man als natives blähfähiges Schichtsilikat Vermiculit, Hydrobiotit und/oder Chlorit-Vermiculit mit einem mittleren Teilchendurchmesser von 0,1 mm bis 10 mm, vorzugsweise 0,3 mm bis 1,0 mm einsetzt.

14. Verfahren nach mindestens einem der Ansprüche 7 bis 13, **dadurch gekennzeichnet, daß** als Lösungsmittel Wasser, ein aliphatischer oder aromatischer Alkohol, ein Ether, ein Ester, ein Alkan, ein Cycloalkan, ein aromatisches Lösungsmittel und/oder ein Amin verwendet wird.

15. Verfahren nach mindestens einem der Ansprüche 7 bis 14, **dadurch gekennzeichnet, daß** bei einer Konzentration des kationischen Tensids bzw. der organischen Intercalatverbindung in der Lösung von 0,01 Mol/l bis 5,0 Mol/l, vorzugsweise 0,1 Mol/l bis 1,0 Mol/l gearbeitet wird.

16. Verfahren nach mindestens einem der Ansprüche 7 bis 15, **dadurch gekennzeichnet, daß** die Ionenaustauschreaktion bzw, die Intercalationsreaktion bei einer Temperatur von 10°C bis 150°C, vorzugsweise 25°C bis 60°C durchgeführt wird.

17. Verfahren nach mindestens einem der Ansprüche 7 bis 16, **dadurch gekennzeichnet, daß** die Ionenaustauschreaktion bzw, die Intercalationsreaktion während einer Reaktionszeit von 0,5 bis 144 Stunden, vorzugsweise 10 bis 36 Stunden durchgeführt wird.

18. Verfahren nach mindestens einem der Ansprüche 7 bis 17, **dadurch gekennzeichnet, daß** die Schichtsilikat-Intercalationsverbindung durch Filtration oder Dekantieren aus der Suspension abgetrennt, mit einigen Millilitern des verwendeten Lösungsmittels gewaschen und dann gegebenenfalls getrocknet wird.

19. Verfahren nach Anspruch 18 **dadurch gekennzeichnet, daß** das Trocknen bei Raumtemperatur, im Vakuum oder im Trockenschrank bei erhöhter Temperatur erfolgt.

20. Verfahren nach Anspruch 19, **dadurch gekennzeichnet, daß** das Trocknen im Trockenschrank während 1 Stunde bis 12 Stunden bei 60 bis 80°C erfolgt.

21. Verwendung der mit dem Verfahren nach mindestens einem der Ansprüche 1 bis 20 erhältlichen Schichtsilikat-Intercalationsverbindungen als Intumeszenzmaterial, welches als intumeszierendes Brandschutzadditiv und/oderin geblähter Form als Additiv für die Herstellung von Flammschutz-Materialien, sowie für die Herstellung von hochtemperaturbeständigen Isolations-und Dämmplatten und Dichtungen, insbesondere für Brandschutz-Abdichtungen von Durchbrüchen, Durchführungen und sonstigen Öffnungen in Wänden, Böden und/oder Decken von Gebäuden eingesetzt werden kann.

## Claims

1. Process for producing layered silicon intercalation compounds with increased expansion volume and/or modified onset temperature, by inserting intercalation compounds into untransformed, malleable layered silicates, particularly untransformed vermiculite, **characterized in that** the untransformed layered silicate undergoes an ion exchange with at least one cationic surfactant and **in that** simultaneously, or in a further stage, at least one organic intercalation compound, chosen from among methanol, ethanol, 2-propanol, 2-butanol, tert-butanol, benzylalcohol, 1-decanol, ethylene glycol, 1,3-propandiol, 1,4-butandiol, glycerol, formic acid, acetic acid, hexanoic acid, adipic acid, malonic acid, citric acid, gluconic acid, glycolic acid, lactic acid, glyoxylic acid, trifluoroacetic acid, nitrilotriacetic acid, the alkali metal salts and amides of acetic acid, malonic acid, citric acid, gluconic acid, ethylene-diamine-tetra-acetic acid and nitrilotriacetic acid, urea, dimethyl malonate, diethyl malonate, teaberry oil, malonic acid diamide, dimethylformamide, dimethyl sulfoxide, nitromethane, acetone, tetrohydrofuran, chloroform, diethyl ether, diphenyl ether, toluol, EDTA and/or its metal complexes, particularly the group including the Mg-EDTA complex and/or the Cu-EDTA complex is embedded in the layered silicate, it also being possible for the intercalation of dimethyl formamide, chloroform, dimethylacetamide, toluol and dimethyl sulfoxide to occur without prior ion exchange.

2. Process in accordance with claim 1, **characterized in that** a surface-active, quaternary alkylammonium compound is used as a cationic surfactant.

3. Process in accordance with claim 2, **characterized in that** a surface-active, quaternary alkylammonium compound of the general formula in which the R₁, R₂, R₃ and R₄, independently of each other, signify hydrogen atoms, straight-chained or branched, saturated or unsaturated alkyl groups, cyclo-alkyl groups, cyclo-alkyl alkyl groups, alkenyl groups, aryl groups, aryl-alkyl groups, or alkylaryl groups with 1 to 30, preferably 1 to 18 C atoms and X is an anion, and with the proviso that at least one of the groups R₁, R₂, R₃ and R₄ has 12 to 30, preferably 12 to 18, C atoms, is used as a cationic surfactant.

4. Process in accordance with claim 3, **characterized in that**, where applicable, a substituted C₁₀-C₁₈-alkyl-tri-C₁-C₁₆ alkyl ammonium salt, C₁₀-C₁₈-dialkyl-di-C₁-C₁₆-alkylammonium salt, C₁₀-C₁₈-trialkyl-C₁-C₁₆-alkyl-ammonium salt and/or C₁₀-C₁₈-tetraalkyl-ammonium salt is used as a surface-active, quaternary alkylammonium compound.

5. Process in accordance with claim 4, **characterized in that** a decyl trimethylammonium halogenide, dodecyl trimethylammonium halogenide, tetradecyl trimethyl ammonium halogenide, octadecyl trimethyl ammonium halogenide and/or tridecyl ammonium halogenide, and preferably a chloride or bromide of these compounds, is used as a surface-active, quaternary alkylammonium compound.

6. Process in accordance with claims 1 to 5, **characterized in that** ethanol, acetic acid, citric acid, malonic acid, gluconic acid, ethylene-diamine-tetra-acetic acid, nitrilotriacetic acid or the alkali metal salts and amides of these carboxylic acids, urea and/or dimethylformamide is embedded as an intercalation compound.

7. Process in accordance with at least one of the preceding claims, **characterized in that**, in a first stage, the ion exchange is carried out by treating the untransformed layered silicate with the at least one cationic surfactant and, in a second stage, treatment with an organic intercalation compound occurs.

8. Process in accordance with claim 7, **characterized in that** the untransformed layered silicate is suspended in a solution of the cationic surfactant in a suitable solvent that, where applicable, with heating, causes intercalation, and **in that** the ion-exchanged layered silicate is separated off from the suspension and, where applicable, is washed and dried, and the organic intercalation compound is then, where applicable, intercalated, from a solution in a suitable solvent, into the ion-exchanged layered silicate and the layered silicate intercalation compound obtained is then separated from the suspension, is washed and, where applicable, is dried.

9. Process in accordance with one of the preceding claims, **characterized in that** the ion-exchange with the cationic surfactant and the incorporation of the organic intercalation compound into the untransformed layered silicate occurs in one stage.

10. Process in accordance with claim 9, **characterized in that** the cationic surfactant and the organic intercalation compound are used in the form of a mix having a mixture ratio that is wanted in the layered silicate intercalation compound.

11. Process in accordance with claim 10, **characterized in that** the untransformed layered silicate is suspended in a solution of the cationic surfactant and the organic intercalation compound is suspended in a suitable solvent, and simultaneous ion exchange and intercalation, where applicable, with heating, is brought about, and **in that** the ion-exchanged layered silicate is separated off from the suspension and is washed and, where applicable, dried.

12. Process in accordance with at least one of claims 7 to 11, **characterized in that** the intercalation compounds are incorporated through an exchange of the intermediate layer water of the layered silicate.

13. Process in accordance with at least one of the preceding claims, **characterized in that** vermiculite, hydrobiotite, and/or chlorite-vermiculite with an average particle diameter of 0.1 mm to 10 mm, preferably 0.3 mm to 1.0 mm, is used as untransformed, malleable layered silicate.

14. Process in accordance with at least one of claims 7 to 13, **characterized in that** water, an aliphatic aromatic alcohol, an ester, an alkane, a cycloalkane, an aromatic solvent and/or an amine is used as a solvent.

15. Process in accordance with at least one of claims 7 to 14, **characterized in that** a concentration of the cationic surfactant or of the organic intercalation compound in the solution of 0.01 mol/l to 5.0 mol/l, preferably 0.1 mol/l to 1.0 mol/l is worked with.

16. Process in accordance with at least one of claims 7 to 15, **characterized in that** the ion exchange reaction or intercalation reaction is carried out at a temperature of 10°C to 150°C, preferably 25°C to 60°C.

17. Process in accordance with at least one of the claims 7 to 16, **characterized in that** the ion exchange reaction or intercalation reaction is carried out during a reaction period of 0.5 to 144 hours, preferably 10 to 36 hours.

18. Process in accordance with at least one of claims 7 to 17, **characterized in that** the layered silicate intercalation compound is separated from the suspension through filtration or decanting, is washed with a few millilitres of the solvent used and where applicable is then dried.

19. Process in accordance with claim 18, **characterized in that** the drying occurs at room temperature, in a vacuum or in a drying cupboard at raised temperature.

20. Process in accordance with claim 19, **characterized in that** the drying occurs in 1 to 12 hours at a temperature of 60 to 80°C.

21. Use of the layered silicate intercalation compound, which can be obtained with the process in accordance with at least one of claims 1 to 20, as intumescence material that can be used as an intumescing fire-protection additive and/or in swollen form as an additive for producing fireproofing material and for producing high-temperature resistant insulation plates and sealing, particularly for fire-protection sealing of openings, ducts and other openings in walls, floors and/or ceilings of buildings.

## Revendications

1. Procédé pour la préparation de composés intercalaires - silicate lamellaire avec un volume d'expansion augmenté et/ou une température de démarrage modifiée par introduction de composés intercalaires dans des silicates lamellaires natifs gonflables, en particulier de la vermiculite native, **caractérisé en ce que** l'on soumet le silicate lamellaire natif à un échange d'ions avec au moins un agent tensio-actif cationique et en même temps ou dans une étape suivante on introduit dans le silicate lamellaire au moins un composé organique intercalaire, choisi parmi le groupe comprenant le méthanol, l'éthanol, le 2-propanol, 2-butanol, tert.-butanol, benzylalcool, 1-décanol, éthylèneglycol, 1,3-propanediol, 1,4-butanediol, glycérol, acide formique, acide acétique, acide hexanoïque, acide adipique, acide malonique, acide citrique, acide gluconique, acide glycolique, acide lactique, acide glyoxylique, acide trifluoroacétique, acide nitrilotriacétique, les sels de métaux alcalins et les amides de l'acide acétique, l'acide malonique, l'acide citrique, l'acide gluconique, l'acide éthylènediaminetétraacétique et l'acide nitrilotriacétique, l'urée, le malonate de diméthyle, le malonate de diéthyle, le salicylate de méthyle, le diamide d'acide malonique, le diméthylformamide, diméthylsulfoxyde, nitrométhane, l'acétone, le tétrahydrofurane, le chloroforme, le diéthyléther, diphényléther, toluène, acide éthylènediaminetétraacétique (EDTA) et/ou leurs complexes métallique, en particulier le complexe Mg-EDTA et/ou le complexe Cu-EDTA, avec la condition que l'intercalation de diméthylformamide, de chloroforme, de diméthylacétamide, de toluène et de diméthylsulfoxyde puisse être effectuée aussi sans échange d'ions préalable.

2. Procédé selon la revendication 1, **caractérisé en ce que** l'on utilise comme agent tensio-actif cationique un composé tensio-actif alkylammonium quaternaire.

3. Procédé selon la revendication 2, **caractérisé en ce que** l'on utilise comme agent tensio-actif cationique un composé tensio-actif alkylammonium quaternaire de formule générale 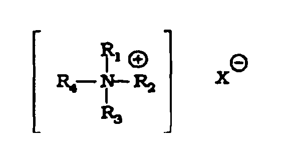 dans laquelle R₁, R₂, R₃, et R₄ indépendamment les uns des autres représentent des atomes d'hydrogène, des groupes alkyle à chaîne linéaire ou ramifiés, saturés ou insaturés, des groupes cycloalkyle, des groupes cycloalkylalkyle, des groupes alcényle, des groupes aryle, des groupes arylalkyle ou des groupes alkylaryle avec 1 à 30, de préférence 1 à 18 atomes de carbone et X⁻ un anion avec la réserve qu'au moins un des groupes R₁, R₂, R₃, et R₄ présente 12 à 30, de préférence 12 à 18 atomes de carbone.

4. Procédé selon la revendication 3, **caractérisé en ce que** l'on utilise comme composé tensio-actif alkylammonium quaternaire un sel (d'alkyle en C₁₀ à C₁₈)-(trialkyle en C₂ à C₆)-ammonium, un sel de (dialkyle en C₁₀ à C₁₈)-(dialkyle en C₁ à C₆)-ammonium, un sel de (trialkyle en C₁₀ à C₁₈)-(alkyle en C₁ à C₆)-ammonium et/ou (tétraalkyle en C₁₀ à C₁₈)-ammonium.

5. Procédé selon la revendication 4, **caractérisé en ce que** l'on utilise comme composé d'ammonium quaternaire tensio-actif un halogénure de décyltriméthylammonium, halogénure de dodécyl-triméthylammonium, halogénure de tétradécyl-triméthylammonium, halogénure d'octadécyl-triméthylammonium, et/ou halogénure de tridécylammonium, de préférence les chlorures ou bromures de ces composés.

6. Procédé selon les revendications 1 à 5, **caractérisé en ce que** l'on incorpore comme composé intercalaire l'éthanol, l'acide acétique, l'acide citrique" l'acide malonique, l'acide gluconique, l'acide éthylènediaminetétraacétique, l'acide nitrilotriacétique ou les sels de métaux alcalins et les amides de ces acides carboxyliques, l'urée et/ou le diméthylformamide.

7. Procédé selon au moins l'une des revendications précédentes, **caractérisé en ce que** l'on effectue dans une première étape un échange d'ions par traitement du silicate lamellaire natif avec au moins un agent tensio-actif cationique et dans une deuxième étape un traitement avec au moins un composé intercalaire organique.

8. Procédé selon la revendication 7, **caractérisé en ce que** l'on met en suspension le silicate lamellaire natif dans une solution de l'agent tensio-actif cationique dans un solvant approprié, on effectue l'intercalation éventuellement en chauffant, on sépare le silicate lamellaire après l'échange d'ions de la suspension, éventuellement on lave et on sèche, ensuite on intercale le composé organique intercalaire éventuellement d'une solution dans un solvant approprié dans un silicate lamellaire après échange d'ions et on sépare, lave et éventuellement sèche le composé intercalaire-silicate lamellaire obtenu de la suspension.

9. Procédé selon au moins l'une des revendications précédentes, **caractérisé en ce que** l'on effectue l'échange d'ions avec l'agent tensio-actif cationique et l'introduction du composé intercalaire organique dans le silicate lamellaire natif en une étape.

10. Procédé selon la revendication 9, **caractérisé en ce que** l'on introduit l'agent tensio-actif cationique et le composé intercalaire organique sous la forme d'un mélange avec le rapport de mélange que l'on cherche à obtenir dans le composé intercalaire-silicate lamellaire.

11. Procédé selon la revendication 10, **caractérisé en ce que** l'on met en suspension le silicate lamellaire natif dans une solution de l'agent tensio-actif cationique et du composé intercalaire organique dans un solvant approprié, on effectue en même temps l'échange d'ions et l'intercalation éventuellement en chauffant et on sépare de la suspension, on lave et on sèche éventuellement le composé intercalaire-silicate lamellaire obtenu.

12. Procédé selon au moins une des revendications 7 à 11, **caractérisé en ce que** l'on introduit les composés intercalaires organiques par échange de l'eau de couche intermédiaire du silicate lamellaire.

13. Procédé selon au moins une des revendications précédentes, **caractérisé en ce que** l'on introduit comme silicate lamellaire gonflable natif de la vermiculite, de l'hydrobiotite et/ou de la chlorite-vermiculite avec un diamètre moyen des particules de 0,1 mm à 10 mm, de préférence de 0,3 mm à 1,0 mm.

14. Procédé selon au moins une des revendications 7 à 13, **caractérisé en ce que** l'on utilise comme solvant de l'eau, un alcool aliphatique ou aromatique, un éther, un ester, un alcane, un cycloalcane, un solvant aromatique et/ou une amine.

15. Procédé selon au moins une des revendications 7 à 14, **caractérisé en ce que** l'on travaille à une concentration de l'agent tensio-actif cationique ou du composé intercalaire organique dans la solution de 0,01 mol/l à 5,0 mol/l, de préférence de 0,1 mol/l à 1,0 mol/l.

16. Procédé selon au moins une des revendications 7 à 15, **caractérisé en ce que** l'on effectue la réaction d'échange d'ions ou la réaction d'intercalation à une température de 10 °C à 150 °C, de préférence de 25 °C à 60 °C.

17. Procédé selon au moins une des revendications 7 à 16, **caractérisé en ce que** l'on effectue la réaction d'échange d'ions ou la réaction d'intercalation pendant un temps de réaction de 0,5 à 144 heures, de préférence de 10 à 36 heures.

18. Procédé selon au moins une des revendications 7 à 17, **caractérisé en ce que** l'on sépare le silicate lamellaire-composé intercalaire de la suspension par filtration ou décantation, on le lave avec quelques millilitres du solvant utilisé et ensuite éventuellement on le sèche.

19. Procédé selon la revendication 18, **caractérisé en ce que** l'on effectue le séchage à température ambiante, sous vide ou dans l'étuve à température élevée.

20. Procédé selon la revendication 19, **caractérisé en ce que** l'on effectue le séchage dans l'étuve pendant 1 heure à 12 heures de 60 à 80 °C.

21. Utilisation des composés intercalaires-silicates lamellaires pouvant être obtenus avec le procédé selon au moins une des revendications 1 à 20 comme matériau intumescent, qui peut être utilisé comme additif pare-flammes intumescent et/ou sous forme gonflée comme additif pour la fabrication de matériaux ignifuges, et pour la fabrication de plaques d'isolation et calorifuges résistant à haute température et de joints, en particulier pour l'étanchéification pare-flammes de traversées, de passages et d'autres ouvertures dans des parois, des sols et/ou des plafonds de bâtiments.
